# EUROPÄISCHE PATENTANMELDUNG

(11) **EP 0 887 018 A2**
(43) Veröffentlichungstag der Anmeldung: **30.12.1998**
(21) Anmeldenummer: 98111414.3
(22) Anmeldetag: 22.06.1998
(51) Int. Cl.: A21B 1/26, A21B 3/02

(54) **Backofen**

(30) Priorität: 26.06.1997 DE 29711055 U
(71) Anmelder: DEBAG Deutsche Backofenbau GmbH, 02625 Stiebitz (DE)
(72) Erfinder: Kiesl, Reinhard, 02692 Eulowitz (DE)
(74) Vertreter: Zapfe, Hans, Dipl.-Ing.

(57) **Zusammenfassung**

Bei einem Backofen (1) mit einem Ofengehäuse (2) und mehreren in diesem durch Backgutträger gebildeten Etagen und mit auf gegenüberliegenden Seiten angeordneten Verschlußelementen sind die Etagen durch die Backgutträger zumindest weitgehend voneinander getrennt, und jeder Etage ist auf gegenüberliegenden Seiten je eine Türklappe (11, 12) als Verschlußelement zugeordnet, derart, daß jede Etage unabhängig von den übrigen Etagen von der einen Seite mit Backgut beschickbar und von der anderen Seite entleerbar ist. Vorzugsweise ist jede Türklappe (11, 12) mit mindestens einem Sichtfenster versehen. Vorzugsweise weist der Backofen (1) eine Backstubenseite (B) und eine Ladenseite (L) auf, und oberhalb des Ofengehäuses (2) ist eine Dunstabzugshaube (16) angeordnet, die mindestens auf der Ladenseite (L) über die Türklappen (11, 12) vorspringend ausgebildet ist und dort einen nach unten gerichteten Haubenrand (17) aufweist.

## Beschreibung

Die Erfindung betrifft einen Backofen mit einem Ofengehäuse und mehreren in diesem durch Backgutträger gebildeten Etagen und mit auf gegenüberliegenden Seiten angeordneten Verschlußelementen.

Durch das DE 68 02 399 U ist ein nur von einer Seite aus bedienbarer Backofen mit Einzelklappen bekannt. Ein dort beschriebenes Schutzblech für eine Strömungsumlenkung dient nur zum Schutz von verchromten Teilen.

Durch die DE 2 022 019 A1 sind der Innenaufbau, das Beheizungs- und das Strömungssystem eines Etagenbackofens bekannt. über die Ausbildung der Bedienungsseiten sind dort keine Ausführungen zu finden.

Durch die DE 25 11 211 B2 ist ein Durchstoßofen mit an beiden Enden angeordneten Doppeltüren für Großbäckereien bekannt, durch den sogenannte Stikkenwagen hindurchgefahren werden. Derartige Stikkenwagen besitzen übereinander liegende Backbleche. Das Backgut kann nur insgesamt auf einer Seite eingefahren und auf der anderen Seite entnommen werden, indem der Stikkenwagen mit dem gesamten Backgut bewegt wird. Solche Öfen haben Ähnlichkeit mit sogenannten Tunnelöfen. Die erforderlichen Türen sind jedoch über die gesamte Höhe des Ofengehäuses bzw. des Stikkenwagens durchgehend ausgebildet.

Durch die DE 33 26 895 A1 ist ein einseitig bedienbarer Etagenbackofen für Stikkenwagen bekannt, bei dem jeder einzelnen Etage eine Klappe zugeordnet ist und sämtliche Klappen in einer Tür angeordnet sind, um den Stikkenwagen auf der gleichen Seite ein- und ausfahren zu können.

Dies hat zur Folge, daß beim Öffnen einer Türseite praktisch die gesamte Backatmosphäre des Ofens entweicht, die aus heißer Luft und Wasserdampf besteht. Dies ist auch der Fall, wenn nur ein einziges Backgut aus dem Ofen entnommen, d.h. "ausgebacken"wird.

Dabei handelt es sich nicht nur um das vom Backgut, z.B. von Brötchen, freigesetzte Wasser, sondern auch um Wasserdampf, der durch Verbrennung von Heizgas und/oder Einspritzen von Wasser in den Ofen erzeugt wird. Abgesehen davon, daß nach jedem Öffnen der Türen Kaltluft einströmt und die Backatmosphäre wieder hergestellt werden muß, was den Backprozeß verzögert und den Energiebedarf erhöht, wird hierdurch auch das Backstubenpersonal und/oder das Ladenpersonal belästigt. Eine hohe Luftfeuchtigkeit im Bäckerladen hat auch einen negativen Einfluß auf dort gelagerte Backwaren.

Die Sichtbarkeit des Backguts und dessen Entnehmbarkeit von der Ladenseite her in extrem frischem Zustand beeinflußt jedoch entscheidend den Kaufwillen der Kunden.

Der Erfindung liegt daher die Aufgabe zugrunde, einen Backofen der eingangs beschriebenen Gattung anzugeben, der etagenweise von der Backstube her beschickt werden kann und aus dem von der Ladenseite her nur ein Teil des Backgutes nach und nach entnommen werden kann, ohne daß dabei jedesmal ein großer Teil der Backatmosphäre entweicht und der Backprozeß des in den übrigen Etagen garenden Backguts gestört wird.

Die Lösung der gestellten Aufgabe erfolgt dabei erfindungsgemäß dadurch, daß die Etagen durch die Backgutträger zumindest weitgehend voneinander getrennt sind und daß jeder Etage auf gegenüberliegenden Seiten je eine Türklappe als Verschlußelement zugeordnet ist, derart, daß jede Etage unabhängig von den übrigen Etagen von der einen Seite mit Backgut beschickbar und von der anderen Seite entleerbar ist.

Durch die erfindungsgemäße Konstruktionsvorschrift wird die gestellte Aufgabe in vollem Umfange zufriedenstellend gelöst, d.h. der Backofen kann etagenweise von der Backstube her beschickt werden, und aus ihm kann von der Ladenseite her nur ein Teil des Backgutes nach und nach entnommen werden, ohne daß dabei jedesmal ein großer Teil der Backatmosphäre entweicht und der Backprozeß des in den übrigen Etagen garenden Backguts gestört wird.

Beim Öffnen der Türenklappen strömt nur eine geringe Menge Kaltluft ein, und die Backatmosphäre wird praktisch nicht gestört, da das Puffervermögen der übrigen, laufend umgewälzten Backatmospäre sehr groß ist. Der Backprozeß wird mithin nicht verzögert und der Energiebedarf verringert. Auch wird das Backstubenpersonal und/oder das Ladenpersonal nicht belästigt. Die Luftfeuchtigkeit im Bäckerladen wird gleichfalls nicht merklich erhöht und hat somit keinen negativen Einfluß auf dort gelagerte Backwaren.

Es ist dabei besonders vorteilhaft, wenn jede Türklappe mit mindesten einem Sichtfenster versehen ist. Dadurch kann das Ladenpersonal sofort entscheiden, aus welcher Etage das ggf. unterschiedliche Backgut entnommen werden kann. Der Backprozeß und der Füllungszustand einer jeden Etage, d.h. auch die Notwendigkeit einer Nachchargierung können dabei durch Sichtfenster sowohl auf der Backstubenseite als auch auf der Ladenseite beobachtet bzw. erkannt werden.

Es ist dabei weiterhin von Vorteil, wenn der Backofen eine Backstubenseite (B) und eine Ladenseite (L) aufweist und wenn oberhalb des Ofengehäuses eine Dunstabzugshaube angeordnet ist, die mindestens auf der Ladenseite (L) über die Türklappen vorspringend ausgebildet ist und dort einen nach unten gerichteten Haubenrand aufweist. Die geringen, ladenseitig austretenden Mengen an Backatmosphäre werden dadurch sofort abgeführt.

Eine besonders raumsparende und effektive Bauweise ergibt sich dadurch, daß unterhalb des untersten Backgutträgers ein nach beiden Seiten vorspringender quaderförmiger Ofensockel angeordnet ist, dessen längste Achse senkrecht zu zwei virtuellen Ebenen verläuft, in denen die Türklappen angeordnet sind, und daß sich im Ofensockel ein Heizregister und auf dessen beiden Seiten je ein Querstromlüfter sowie ein Schwadenapparat mit Kondensatablauf befindet, deren Längsachsen wenigstens angenähert parallel zur längsten Achse des Ofensockels verlaufen.

Diese Bauweise ist bei Tunnelöfen für Stikkenwagen nicht möglich, da diese auf dem Fußboden verfahrbar sind. Der Ofensockel kann dadurch an beiden Enden als Ablagefläche dienen, er umschließt auch raumsparend die zur Erzeugung der Backatmosphäre benötigten Aggregate.

Besonders vorteilhaft ist es dabei, wenn vom Schwadenapparat ausgehend auf jeder Langseite des Ofengehäuses ein keilförmiger, sich nach oben verjüngender und zu den Etagen offener Strömungskanal angeordnet ist. Durch beide Strömungskanäle kann die aufgeheizte Luft im Umluftverfahren über die Backgutträger und das Backgut durch die Etagen geführt werden.

Ein Ausführungsbeispiel des Erfindungsgegenstandes wird nachfolgend durch die Figuren 1 bis 5 näher erläutert.

Es zeigen:
- Figur 1: eine Seitenansicht des Backofens,
- Figur 2: die ladenseitige Vorderansicht des Backofens nach Figur 1,
- Figur 3: die backstubenseitige Rückansicht des Backofens nach Figur 1,
- Figur 4: einen schematisierten Längsschnit durch den Backofen nach Figur 1 entlang der Linie V-V in Figur 5 in verkleinertern Maßstab und
- Figur 5: einen schematisierten Querschnitt durch den Backofen nach Figur 4 entlang der Linie IV-IV.

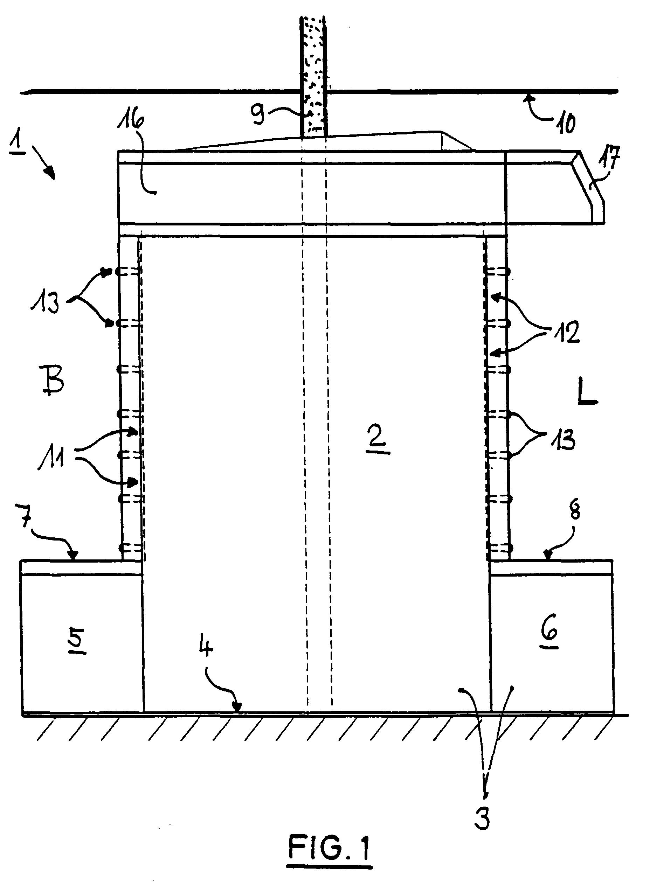

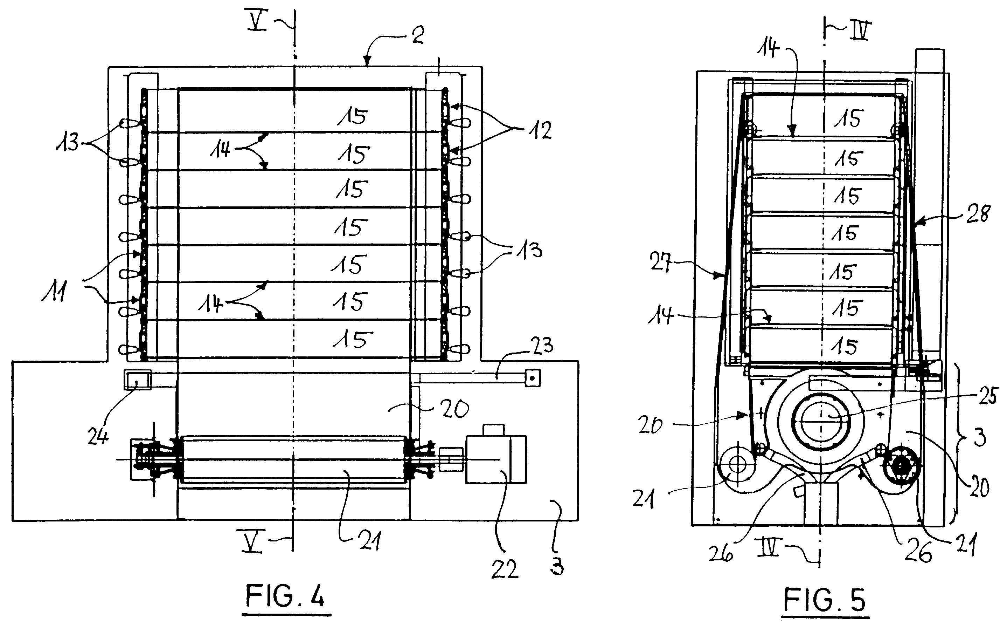

In Figur 1 ist ein Backofen 1 dargestellt, der ein quaderförmiges Ofengehäuse 2 aufweist, das in einen ebenfalls quaderförmigen Ofensockel 3 übergeht, dessen längste Achse parallel zum Boden 4 und zur Zeichenebene verläuft. Vorsprünge 5 und 6 des Ofensockels 3 bilden Ablageflächen 7 und 8. Eine Raumwand 9 unterteilt den Backofen 1 etwa mittig in eine Backstubenseite B und eine Ladenseite L. Auf jeder Seite und senkrecht zur Zeichenebene befinden sich übereinander sieben Türklappen 11 bzw. 12 mit Handgriffen 13. Die Türklappen 11 und 12 besitzen waagrechte Scharniere, um die die Türklappen nach oben in eine waagrechte Stellung geklappt werden können. In waagrechten Ebenen zwischen den Türklappen befinden sich Backgutträger 14, die in das Ofengehäuse eingeschweißt sind, aber auch auswechselbar sein können. Dadurch werden zwischen den Backgutträgern 14 "Etagen" 15 gebildet (Figuren 4 und 5).

Auf dem Ofengehäuse 1 befindet unterhalb der Raumdecke 10 eine Dunstabzugshaube 16, die auf der Ladenseite L über eine virtuelle senkrechte Ebene vorspringt, in der die Türklappen 12 liegen, und die dort einen nach unten gerichteten Haubenrand 17 besitzt. Zur Backstubenseite B hin ist die Dunstabzugshaube geschlossen.

Die Türklappen 11 und 12 bestehen aus identischen Gußteilen mit je einem Sichtfenster 18. Zur Halterung der Türklappen 11 und 12 werden sog. "Schrufte" verwendet, das sind aus Edelstahlprofilen zusammengeschweißte Rahmen.

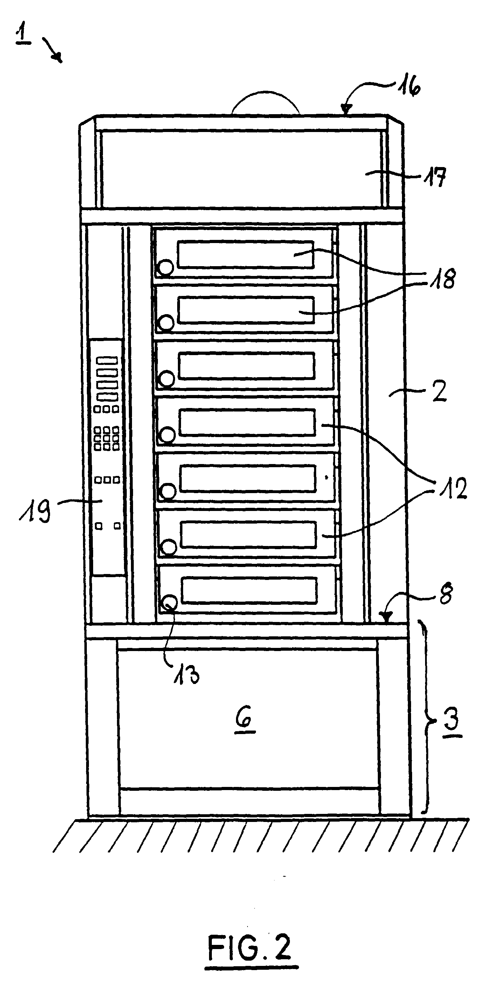

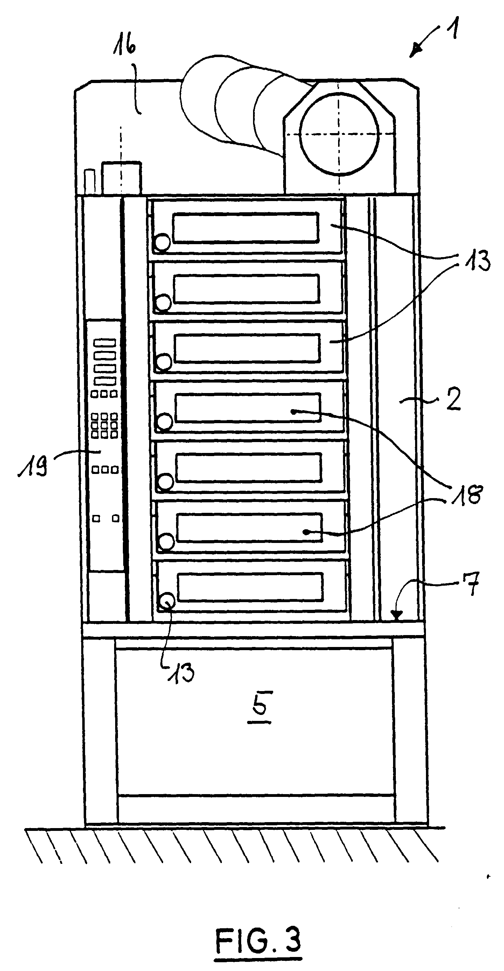

Wie die Figuren 2 und 3 zeigen, sehen Vorder- und Rückseite des Backofens 1 identisch aus. Links von den Reihen der Türklappen 11 und 12 befinden sich Bedienungs- und Anzeigetafeln 19, so daß der Backofen 1 von beiden Seiten gesteuert werden kann.

Wie die Figuren 4 und 5 (ohne Dunstabzugshaube) weiterhin zeigen, sind im Ofensockel 3 - parallel zu dessen längster Achse - folgende Elemente untergebracht: Zwei Schwadenapparate 20 mit je einem Querstromlüfter 21, die durch je einen Motor 22 angetrieben werden, sowie zwei Einspritzrohre 23 für Wasser und ein Abdampfkanal 24 (Figur 4).

Ferner sind im Ofensockel 3 ein Heizregister 25 und zwei Kondensatabläufe 26, sämtlich parallel zur längsten Achse des Ofensockels 3, angeordnet. Ausgehend vom Schwadenapparat 20 verläuft auf jeder Langseite des Ofengehäuses 2 ein keilförmiger, sich nach oben verjüngender Strömungskanal 27 bzw. 28. Durch die beiden Strömungskanäle 27 und 28 wird die aufgeheizte Luft mit dem Wasserdampf im Umluft- bzw. Kreislaufverfahren und in Parallelströmen über die Backgutträger 14 und das Backgut durch die Etagen geleitet (Figur 5).

## Patentansprüche

1. Backofen mit einem Ofengehäuse (2) und mehreren in diesem durch Backgutträger (14) gebildeten Etagen (15) und mit auf gegenüberliegenden Seiten angeordneten Verschlußelementen, **dadurch gekennzeichnet,** daß die Etagen (15) durch die Backgutträger (14) zumindest weitgehend voneinander getrennt sind und daß jeder Etage (15) auf gegenüberliegenden Seiten je eine Türklappe (11, 12) als Verschlußelement zugeordnet ist, derart, daß jede Etage (15) unabhängig von den übrigen Etagen von der einen Seite mit Backgut beschickbar und von der anderen Seite entleerbar ist.

2. Backofen nach Anspruch 1, **dadurch gekennzeichnet,** daß jede Türklappe (11, 12) mit mindestens einem Sichtfenster (18) versehen ist.

3. Backofen nach Anspruch 1, **dadurch gekennzeichnet,** daß der Backofen eine Backstubenseite (B) und eine Ladenseite (L) aufweist und daß oberhalb des Ofengehäuses (2) eine Dunstabzugshaube (16) angeordnet ist, die mindestens auf der Ladenseite (L) über die Türklappen (11, 12) vorspringend ausgebildet ist und dort einen nach unten gerichteten Haubenrand (17) aufweist.

4. Backofen nach Anspruch 1, **dadurch gekennzeichnet,** daß unterhalb des untersten Backguttragers (14) ein nach beiden Seiten vorspringender quaderförmiger Ofensockel (3) angeordnet ist, dessen längste Achse senkrecht zu zwei virtuellen Ebenen verläuft, in denen die Türklappen (11, 12) angeordnet sind, und daß sich im Ofensockel (3) ein Heizregister (25) und auf dessen beiden Seiten je ein Schwadenapparat (20) mit je einem Querstromlüfter (21) und je einem Kondensatablauf (26) befinden, deren Längsachsen wenigstens angenähert parallel zur längsten Achse des Ofensockels (3) verlaufen.

5. Backofen nach Anspruch 1, **dadurch gekennzeichnet,** daß vom den Schwedenapparaten (20) ausgehend auf jeder Langseite des Ofengehäuses (2) je ein keilförmiger, sich nach oben verjüngender und zu den Etagen (15) offener Strömungskanal (27, 28) angeordnet ist, durch die aufgeheizte Luft im Umluftverfahren über die Backgutträger (14) und durch die Etagen (15) führbar ist.
